# EUROPEAN PATENT SPECIFICATION

(11) **EP 4 450 337 B1**
(45) Date of publication and mention of the grant of the patent: **19.11.2025**
(21) Application number: 23169192.4
(22) Date of filing: 21.04.2023
(51) Int. Cl.: B60R 22/24, B60R 13/02

(54) **SAFETY BELT OUTLET ARRANGEMENT**
AUSLASSVORRICHTUNG FÜR SICHERHEITSGURTE
DISPOSITIF DE SORTIE DE LA CEINTURE DE SÉCURITÉ

(43) Date of publication of application: 23.10.2024
(73) Proprietor: Wuhan Lotus Cars Co., Ltd., Wuhan, Hubei (CN)
(72) Inventor: Corti, Enrico, 60438 Frankfurt am Main (DE)
(74) Representative: Studio Torta S.p.A.

(56) References cited:
- WO-A1-2012/052015
- WO-A1-2014/132807
- CN-B- 107 499 248
- KR-B1- 101 130 620

## Description

The present application relates to a belt outlet arrangement. The application further relates to a belt outlet system, a vehicle, and a method.

### Background

Belt outlets are common provided in the interior of motor vehicles. They serve as openings, or ducts, which enable that a belt, typically a safety belt, extends movably between a compartment behind an interior trim of the vehicle structure, where the belt is firmly connected to the vehicle body, and an interior of the vehicle, normally a passenger space, where the belt may be pulled through the belt outlet to a desired length for use by a driver or passenger of the vehicle.

Apart from providing a conduit for the belt through the trim, a belt outlet typically serves various purposes. While the belt needs to be easily movable through the belt outlet, the belt outlet also defines one of the positions from which the belt mechanically interacts with a user. Thus, the belt outlet functions as a mechanical guide for the belt motion, which ideally has low friction, is mechanically robust and is located at an ergonomically suited position in the vehicle. Furthermore, as trims provide for noise reduction in the vehicle interior as well as visual concealment of the vehicle structure, an aperture in the trim through which the belt extends means a rupture in the acoustic and visual sealing provided by the trim. Therefore, it is typically intended that a belt outlet provide an opening for the belt that is as small as possible. However, installation of the belt during manufacture of the vehicle normally demands that relatively large belt components, such as a belt lock, can be pushed through the trim at a position of the belt outlet.

To comply with these requirements, conventionally, a relatively large opening is provided in the trim, which after installation of the belt becomes partially closed by means of a bezel.

WO2012052015A1 discloses a vehicle seat, in particular a motor vehicle seat, including a sitting part structure (2) and a seatback structure (1) which is arranged so as to pivot at its lower end on the sitting part structure (2) and is covered by a seatback cover (23) and to which, in its upper region on the vehicle sill side, is secured a belt deflector (5) including a belt runner opening for a seatbelt (4), the belt runner opening facing in the longitudinal direction of the vehicle.

CN107499248B discloses an A-pillar upper trim panel for interior decoration of a passenger vehicle for preventing head collision, including an upper trim panel body, an air cushion groove, a first air cushion connection hole, a second air cushion connection hole, a distance sensor, an air cushion, a first spring column, a second spring column, a second spring fixing seat, a first spring fixing seat, an air delivery hose, a triangle valve, an air outlet pipe, a solenoid valve, an air pump, and a controller.

There is an ongoing need for improved belt outlet techniques.

### Summary of the Invention

The present invention is set out in the appended set of claims. Accordingly, there is provided a belt outlet arrangement according to claim 1, a belt outlet system according to claim 8, a vehicle according to claim 13, and a method according to claim 14,

According to a first aspect, a belt outlet arrangement, in particular for use in a vehicle, is described. The belt outlet arrangement comprises an outlet bezel configured to guide a motion of a belt which extends movably through a bezel opening of the outlet bezel, and a trim portion adapted to cover at least a region of a structure of a vehicle to which the belt is connected, the trim portion comprising an elastic region in which a trim opening is arranged. The outlet bezel is arranged adjacent the elastic region of the trim portion such that the trim opening is cladded at least partially by means of the outlet bezel to form an outlet for the belt through the trim portion. The trim portion can be an interior trim, i.e., a portion of an interior trim, in particular an upper pillar trim, such as a rear upper pillar trim.

The elastic region facilitates that belt components, in particular a belt lock, be pushed through the trim opening during installation of the belt. In this context, the elastic region facilitates that a size of the trim opening can be elastically expanded, especially before an installation of the outlet bezel. As a result, the trim opening can be dimensioned such that it is smaller during a relaxed state of the elastic region than an opening size required for pushing the belt components through. In particular, the trim opening can be smaller during a relaxed state of the elastic region than a cross section of the belt components to be pushed through the trim opening.

This facilitates that the bezel also can be dimensioned smaller than a size of an opening required for pushing the belt components through, in particular smaller than the cross section of the belt components. Thus, the trim opening and the bezel can be dimensioned essentially in accordance with a minimum size required for the belt outlet after installation, such as for providing a mechanical guide for the belt motion. In this way, a visual impact caused by the belt outlet arrangement, in particular by the outlet bezel, can be minimized.

The outlet bezel may comprise rigid material. The rigid material may be rigid plastic. The outlet bezel may be configured to provide a rigid guide for the motion of the belt. The elastic region of the trim portion may comprise silicone.

The elastic region enables changing a position of the outlet bezel relative to at least a part of the trim portion, in particular relative to trim parts surrounding the elastic region. In this way, an adjustable position of the outlet bezel can be provided for, such as by means of an adjustable vehicle structure supporting the outlet bezel and/or an actuator device, without requiring an enlarged opening in the trim portion. Thus, an acoustic and visual impact caused by the belt outlet arrangement in connection with a changeable position of the outlet bezel can be further reduced.

The elastic region may enable changing the position of the outlet bezel parallel to a surface of the trim portion. The surface of the trim portion may be a surface facing towards an interior, or a passenger space, of the vehicle. The elastic region may enable changing the position of the outlet bezel in an extension plane of the elastic region. In addition or as an alternative, the elastic region may enable changing the position of the outlet bezel in a direction non-parallel to an extension plane of the elastic region, in particular in a direction vertical to an extension plane of the trim portion adjacent the elastic region.

The structure of the vehicle may comprise a pillar of the vehicle. The elastic region may enable changing the position of the outlet bezel in at least one of a vertical and a longitudinal direction of the vehicle and/or of the pillar.

A "longitudinal direction" of the vehicle and/or of the pillar may be defined as a direction of the vehicle and/or of the pillar which is parallel to a main driving direction of the vehicle. A "vertical direction" of the vehicle and/or of the pillar may be orthogonal to the main driving direction of the vehicle. Furthermore, changing the position of the outlet bezel in the longitudinal direction of the vehicle and/or of the pillar may comprise changing of the position of the outlet bezel such that at least a geometric component of a motion of the outlet bezel from the position prior to the changing towards the position after the changing is parallel to the longitudinal direction of the vehicle and/or of the pillar. Likewise, changing the position of the outlet bezel in the vertical direction of the vehicle and/or of the pillar may comprise changing of the position of the outlet bezel such that at least a geometric component of a motion of the outlet bezel from the position prior to the changing towards the position after the changing is parallel to the vertical direction of the vehicle and/or of the pillar.

In addition or as an alternative, the elastic region may enable changing the position of the outlet bezel in a lateral direction of the vehicle and/or of the pillar. A "lateral direction" of the vehicle and/or of the pillar may be defined as a direction of the vehicle and/or of the pillar which is orthogonal to a main driving direction of the vehicle in a horizontal plane of the vehicle. Changing the position of the outlet bezel in the lateral direction of the vehicle and/or of the pillar may comprise changing of the position of the outlet bezel such that at least a geometric component of a motion of the outlet bezel from the position prior to the changing towards the position after the changing is parallel to the lateral direction of the vehicle and/or of the pillar.

A position of the outlet bezel may be changeable over at least a predetermined range. An elasticity of a material of the elastic region and/or a size of the elastic region may be chosen such that the elastic region deforms at least essentially wrinkle-free when the position of the outlet bezel is changed within the predetermined range.

According to a second aspect, a belt outlet system is described. The belt outlet system comprises a belt outlet arrangement as presently described, and at least one actuator device arranged to change the position of the outlet bezel.

A travel range of the at least one actuator device may correspond to the predetermined range. The predetermined range may correspond to a range provided for adjusting the position of the outlet bezel to at least one of a shoulder position, a neck position or a body size of a user of the belt.

The belt outlet system may further comprise at least one sensor configured to detect a position of at least a part of a body of a user of the belt. The at least one sensor may be configured to visually detect a position of a shoulder of the user of the belt.

The belt outlet system may further comprise a control unit. The control unit may be configured to receive, from the at least one sensor, a sensor signal indicative of the position of at least the part of the body of the user of the belt, generate, based on the received sensor signal, a control signal for operating the at least one actuator device to adjust a position of the outlet bezel in accordance with the position of at least the part of the body of the user of the belt, and output the control signal towards the at least one actuator device.

In this way, automatic adjustment of the position of the outlet bezel to at least one of a shoulder position, a neck position or a body size of a user of the belt is achievable.

According to a third aspect, a vehicle is described. The vehicle comprises a belt outlet arrangement as presently described and/or a belt outlet system as presently described.

According to a fourth aspect, a method of operating a belt outlet system is described. The belt outlet system comprises a belt outlet arrangement. The belt outlet arrangement has an outlet bezel configured to guide a motion of a belt which extends movably through a bezel opening of the outlet bezel, and a trim portion adapted to cover at least a region of a structure of a vehicle to which the belt is connected, the trim portion comprising an elastic region in which a trim opening is arranged, wherein the outlet bezel is arranged adjacent the elastic region of the trim portion such that the trim opening is cladded at least partially by means of the outlet bezel to form an outlet for the belt through the trim portion, and the elastic region enables changing a position of the outlet bezel relative to at least a part of the trim portion. The belt outlet system further comprises at least one actuator device arranged to change the position of the outlet bezel relative to the trim portion, at least one sensor configured to detect a position of at least a part of a body of a user of the belt, and a control unit. The method comprises receiving, by means of the control unit and from the at least one sensor, a sensor signal indicative of the position of at least the part of the body of the user of the belt, generating, by means of the control unit and based on the received sensor signal, a control signal for operating the at least one actuator device to adjust a position of the outlet bezel in accordance with the position of at least the part of the body of the user of the belt, and outputting, by means of the control unit, the control signal towards the at least one actuator device.

### Brief Description of the Drawings

Further details, advantages and objectives of the invention become apparent from the drawings and the detailed description. There is shown in the drawings:
- Figs 1A - 1B: different views of a belt outlet arrangement;
- Fig. 2: a perspective, cross-sectional view of a belt outlet arrangement according to an example;
- Fig. 3: a side view of the belt outlet arrangement of Fig. 2;
- Fig. 4: a perspective, cross-sectional view of a belt outlet system according to an example;
- Fig. 5: a schematic view of a vehicle according to an example, and
- Fig. 6: a flow diagram of a method according to an example

### Detailed Description

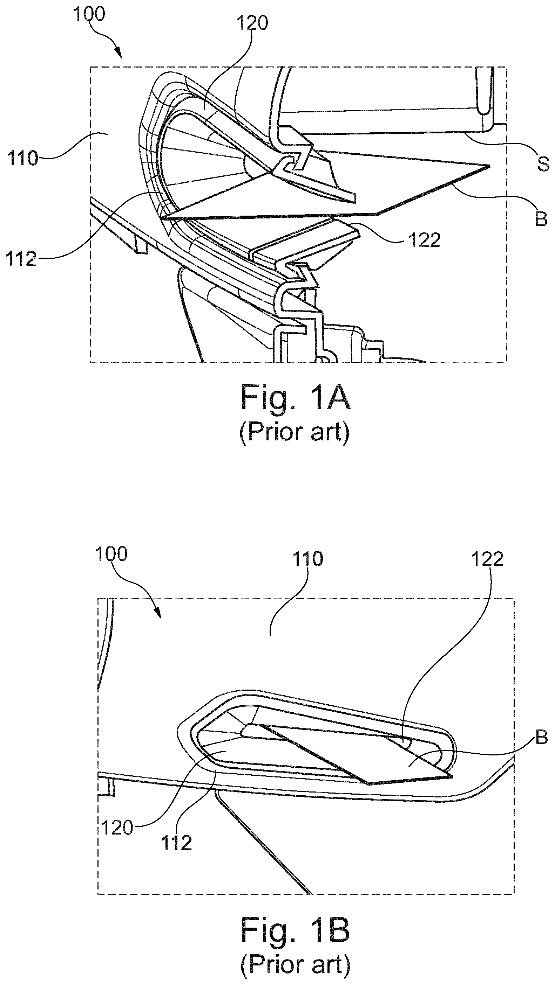

Fig. 1A shows schematically and exemplarily a perspective, cross-sectional view of a belt outlet arrangement 100. The belt outlet arrangement 100 comprises a trim portion 110, in which a trim opening 112 extends. The belt outlet arrangement 100 further comprises an outlet bezel 120 which is arranged in the trim opening 112. The trim portion 110 covers at least partially a vehicle structure S. Moreover, the trim opening 112 permits that a belt B, for example, a safety belt, extends movably through the trim portion 110 from a side where the structure S is located to the other side of the trim portion 110, for example, corresponding to an interior or a passenger space of the vehicle.

The outlet bezel 120 has a bezel opening 122 through which the belt B extends. The outlet bezel 120 is arranged such that it clads the trim opening 112 along an inner circumference of the trim opening 112. Moreover, the outlet bezel 120 reduces the size of an effective opening through which the belt B extends, i.e., from the larger size of the trim opening 112 to the smaller size of the bezel opening 122.

A size of the trim opening 112 may be chosen in accordance with a size required for pushing belt components of the belt B, for example, a belt lock, through the trim portion 110 during installation of the belt B. In contrast, a size of the bezel opening 122 may be chosen in accordance with a minimal size required to provide secure and guided motion of the belt B, with low friction, during use.

Fig. 1B shows a side view of the belt outlet arrangement 100 as seen from an interior of the vehicle. Identical reference signs as in Fig. 1A denote identical features. A position of the belt outlet arrangement 100 corresponds in the shown example to an upper section of the rear column of the vehicle.

As can be seen in Fig. 1B, a minimum size of the bezel opening 122 as needed for providing a low-friction, guided motion of the belt B is significantly smaller than a size of the trim opening 112 as required for installation of the belt B. In consequence, an impact caused by the profile of the bezel 120 on the visual appearance of the belt outlet arrangement 100 is significant in this case.

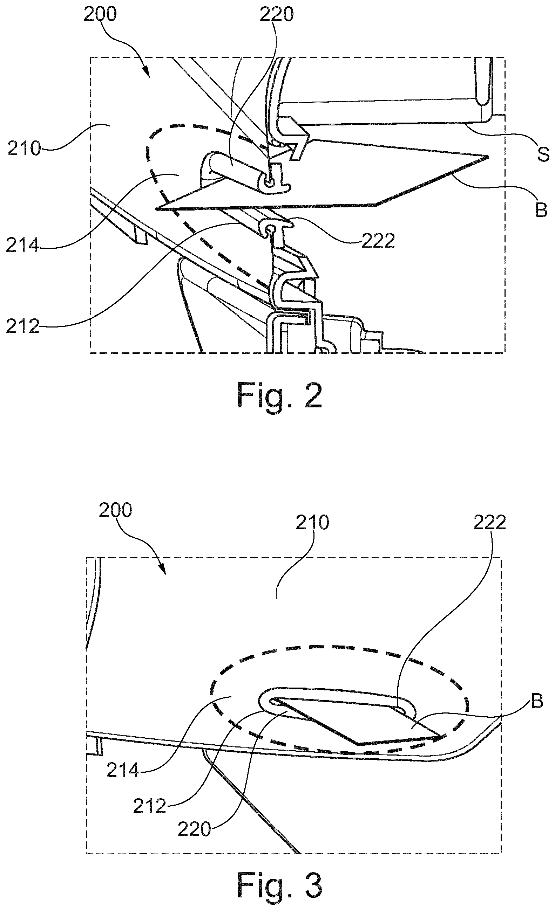

Fig. 2 shows schematically and exemplarily a perspective, cross-sectional view of a belt outlet arrangement 200 according to another example. The belt outlet arrangement 200 comprises a trim portion 210 and an outlet bezel 220. The outlet bezel 220 clads a trim opening 212 of the trim portion 210. Moreover, a belt B extends through a bezel opening 222 of the outlet bezel 220. The trim portion 210 covers a structure S, such as a rear column of a vehicle. In addition, the outlet bezel 220 provides for low-friction, guided motion of the belt B through the trim portion 210.

Regarding the aforesaid features, the description of the belt outlet arrangement 100 in Figs 1A and 1B applies correspondingly unless otherwise clear from the drawings and the following description.

The trim portion 210 comprises an elastic region 214. An outer boundary of the elastic region 214 is indicated in Fig. 2 by the dashed curve segment. The elastic region 214 extends around the trim opening 212. Thus, the outlet bezel 220, which clads the trim opening 212, is arranged adjacent the elastic region 214. In turn, the elastic region 214 surrounds the outlet bezel 220 in a plane of the trim portion 210.

The elastic region 214 enables changing a position of the outlet bezel 220, for example, parallel to a direction within an extension plane of the elastic region 214. To this end, in some examples, the elastic region 214 comprises elastic material, such as silicone. In addition, the elastic region 214 enables in some examples moving the outlet bezel 220 relative to parts of the trim portion 210 without causing wrinkles of the elastic region 214.

The belt outlet arrangement 200 comprises in some examples an outlet bezel 220 which is made of a rigid material, such as rigid plastic. In this way, the belt outlet arrangement 200 facilitates in some examples low-friction motion of the belt B through the belt outlet arrangement 200. Particularly, in some examples, a friction coefficient for a motion of the belt B on the material of the outlet bezel 220 is less than a friction coefficient for a hypothetic motion of the belt B on the material of the elastic region 214.

Fig. 3 shows a side view of the belt outlet arrangement 200. As indicated in Fig. 3, a visual impact caused by the outlet bezel 220 is significantly less than in the case of the outlet bezel 120 in Fig. 1B. This is essentially enabled by the elastic region 212. The elastic region 214 enables in particular that during installation of the belt B and prior to an installation of the outlet bezel 220 the trim opening 212 can be expanded when belt components are pushed through the trim opening 212. As a result, a size of the trim opening 212 does not need to be chosen larger than a size required for guiding a motion of the belt B when in use, i.e., after the outlet bezel 220 has been installed.

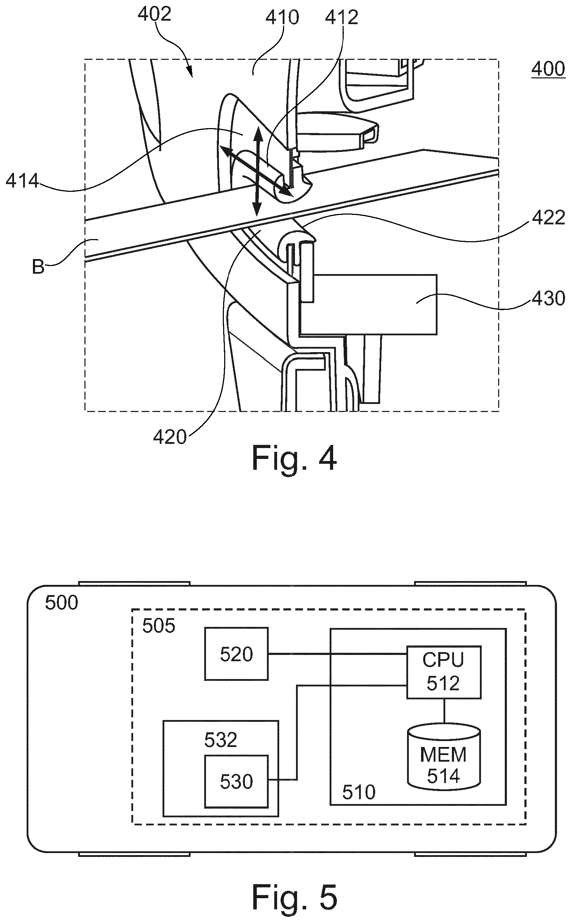

Fig. 4 shows schematically and exemplarily a perspective, cross-sectional view of a belt outlet system 400. The belt outlet system 400 comprises a belt outlet arrangement 402 and an actuator device 430.

Regarding the belt outlet arrangement 402, the description of the belt outlet arrangement 200 shown in Figs 2 and 3 applies correspondingly unless otherwise clear from the following description and the drawings. In particular, the belt outlet arrangement 402 comprises a trim portion 410 having an elastic region 414 in which a trim opening 412 extends. In addition, the belt outlet arrangement 402 comprises an outlet bezel 420 which clads the trim opening 412 and which has a bezel opening 422. As indicated by the arrows in Fig. 4, the elastic region 414 facilitates that a position of the outlet bezel 420 is changed vertically as well as horizontally with respect to surrounding parts of the trim portion 410.

The actuator device 430 acts on the outlet bezel 420. In some examples, the actuator device 430 is attached to, and supported by, a structure of the vehicle. In the examples, at least one actuatable member of the actuator device 430 is connected to the outlet bezel 420. By operating the actuator device 430 a position of the outlet bezel 420 can be changed parallel to at least one direction, for example, of a vertical structure which is covered by the trim portion 410. Referring to the aforesaid examples, the actuator device 430 acts on both the outlet bezel 420 and the structure of the vehicle to change the position of the outlet bezel 420 relative to the structure of the vehicle.

Changing the position of the outlet bezel 420 by means of the actuator device 430 is performed in some examples for adjusting a position of the outlet bezel 420 to a body size of the user of the belt B, for example, a passenger or driver of the vehicle in which the belt outlet system 400 is installed. In some of these examples, the position of the outlet bezel 420 is changeable at least in a vertical direction for adjusting a vertical position of the outlet bezel 420 to a shoulder height, or a neck height, etc., of the user. In other examples, adjusting a position of the outlet bezel 420 comprises changing the position of the outlet bezel 420 at least in a horizontal direction, for example, parallel to the longitudinal direction, i.e., the main driving direction, of the vehicle in which the belt outlet system 400 is installed, for example, in accordance with an adjustable seat position.

In some of the aforesaid examples, changing the position of the outlet bezel 420 in a vertical direction and/or parallel to the main driving direction of the vehicle is performed such that the position of the outlet bezel 420 is changed in an extension plane of the elastic region 414, as indicated in Fig. 4 by the double arrows. In this case, the extension plane of the elastic region 414 is oriented at least essentially parallel to the vertical direction and the longitudinal direction of the vehicle.

In other examples, the extension plane of the elastic region 414 is oriented at an angle relative to the plane spanned by the vertical direction and the longitudinal direction of the vehicle. In these examples, when the position of the outlet bezel 420 is changed in the vertical direction and/or parallel to the main driving direction of the vehicle, for example, in connection with any of the aforesaid adjustments to a body height or a seat position, the elastic region 414 enables changing the position of the outlet bezel 420 in a direction non-parallel to an extension plane of the elastic region 414, and non-parallel to the surface of the trim portion 410 surrounding the elastic region 414.

Furthermore, in some examples, adjusting a position of the outlet bezel 420 comprises changing the position of the outlet bezel 420 in a horizontal direction orthogonal to the longitudinal direction, i.e., in a lateral direction, of the vehicle in which the belt outlet system 400 is installed. In some of these examples, the position of the outlet bezel 420 is adjustable in this way to a lateral body size, such as a detected shoulder width, of the user. Referring to Fig. 4, changing the position of the outlet bezel 420 in the lateral direction involves changing the position of the outlet bezel 420 in a direction non-parallel to an extension plane of the elastic region 414, and non-parallel to the surface of the trim portion 410 surrounding the elastic region 414.

Fig. 5 shows schematically and exemplarily a vehicle 500 comprising a belt outlet system 505. For the belt outlet system 505, the description of the belt outlet system 400 shown in Fig. 4 applies correspondingly unless otherwise clear from the following description and the drawings. In particular, the belt outlet system 505 comprises a belt outlet arrangement 532 having an actuator device 530, which is arranged to change the position of an outlet bezel of the belt outlet arrangement 532.

The belt outlet system 505 further comprises a sensor 520. The sensor 520 is arranged to detect the position of at least a body part of a user of the belt associated with the belt outlet arrangement 532. In some examples, the sensor 520 comprises a camera which is operated for detecting a shoulder position and/or a neck position of the user.

The belt outlet system 505 further comprises a control unit 510. The control unit 510 comprises a processing unit 512, which is operably connected to a data storage unit 514 of the control unit 510. In addition, the control unit 510 is communicatively connected to the sensor 520 and the actuator device 530. The data storage unit 514 contains program code which is executable by means of the processing unit 512. In the shown example, the processing unit 512 is configured to receive from the sensor 520 sensor signal indicating the position of at least a body part of the user of the belt outlet arrangement 532. Furthermore, the processing unit 512 is configured to determine, based on the received sensor signal, a control signal for controlling the actuator device 530 in accordance with a determined position of at least the body part of the user. The control unit 512 is further configured to generate and output the determined control signal towards the actuator device 530. When receiving the control signal from the control unit 510, the actuator device 530 operates to change the position of the outlet bezel accordingly.

For determining the control signal, the control unit 512 is in some examples configured to perform image analysis on a video signal received from the sensor 520 for determining the position of the body part of the user in the image. In other examples of the belt outlet system 500, other types of sensors 520 and/or other types of data processing applied to a sensor signal by means of the control unit 512 are used for determining the position of at least a body part of the user.

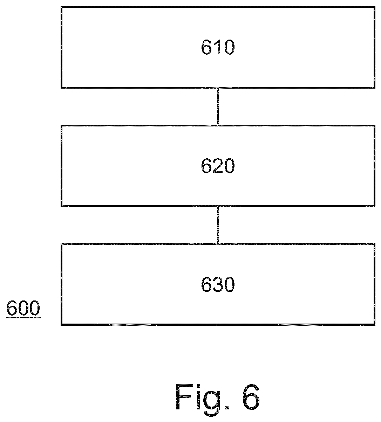

Fig. 6 shows a flow diagram of a method 600 for operating a belt outlet system. The method 600 is executable, for example, using the belt outlet system 505.

The method 600 comprises receiving, by means of a control unit and from at least one sensor of the belt outlet system, a sensor signal indicative of the position of at least a part of the body of a user of the belt which is associated with a belt outlet arrangement of the belt outlet system, step 610. The method 600 further comprises generating, by means of the control unit and based on the received sensor signal, a control signal for operating at least one actuator device of the belt outlet system to adjust a position of the outlet bezel in accordance with the position of at least the part of the body of the user, step 620. Furthermore, the method 600 comprises outputting, by means of the control unit, the control signal towards the at least one actuator device of the belt outlet system.

## Claims

1. Belt outlet arrangement (200; 402; 532), in particular for use in a vehicle (500), comprising:
an outlet bezel (220; 420) configured to guide a motion of a belt (B) which extends movably through a bezel opening (222; 422) of the outlet bezel (220; 420), and
a trim portion (210; 410) adapted to cover at least a region of a structure (S) of a vehicle (500) to which the belt (B) is connected, the trim portion (210; 410) comprising an elastic region (214; 414) in which a trim opening (212; 412) is arranged,
wherein:
the outlet bezel (220; 420) is arranged adjacent the elastic region (214; 414) of the trim portion (210; 410) such that the trim opening (212; 412) is cladded at least partially by means of the outlet bezel (220; 420) to form an outlet for the belt (B) through the trim portion (210; 410),
the elastic region (214; 414) enables changing a position of the outlet bezel (220; 420) relative to at least a part of the trim portion (210; 410).

2. Belt outlet arrangement according to claim 1, wherein the outlet bezel (220; 420) comprises rigid material.

3. Belt outlet arrangement according to claim 1 or claim 2, wherein the elastic region (214; 414) comprises silicone.

4. Belt outlet arrangement according to claim 1, wherein the elastic region (214; 414) enables changing the position of the outlet bezel (220; 420) parallel to a surface of the trim portion (210; 410).

5. Belt outlet arrangement according to any one of the preceding claims, wherein the elastic region (214; 414) enables changing the position of the outlet bezel (220; 420) in at least one of a vertical and a longitudinal direction of the vehicle (500).

6. Belt outlet arrangement according to any one of the preceding claims, wherein the structure (S) of the vehicle (500) comprises a pillar of the vehicle (500).

7. Belt outlet arrangement according to any one of the preceding claims, wherein a position of the outlet bezel (220; 420) is changeable over at least a predetermined range, and wherein an elasticity of a material of the elastic region (214; 414) and/or a size of the elastic region (214; 414) is chosen such that the elastic region (214; 414) deforms at least essentially wrinkle-free when the position of the outlet bezel (220; 420) is changed within the predetermined range.

8. Belt outlet system (400; 505) comprising:
a belt outlet arrangement according to any one of the preceding claims, and
at least one actuator device (430; 530) arranged to change a position of the outlet bezel (220; 420).

9. Belt outlet system according to claim 8 in combination with claim 7, wherein a travel range of the at least one actuator device (430; 530) corresponds to the predetermined range.

10. Belt outlet system according to claim 8 or claim 9, further comprising at least one sensor (520) configured to detect a position of at least a part of a body of a user of the belt (B).

11. Belt outlet system according to claim 10, wherein the at least one sensor (520) is configured to visually detect a position of a shoulder of the user of the belt (B).

12. Belt outlet system according to claim 10 or claim 11, further comprising a control unit (510) configured to:
receive, from the at least one sensor (520), a sensor signal indicative of the position of at least the part of the body of the user of the belt (B);
generate, based on the received sensor signal, a control signal for operating the at least one actuator device (430; 530) to adjust a position of the outlet bezel (220; 420) in accordance with the position of at least the part of the body of the user of the belt (B), and
output the control signal towards the at least one actuator device (430; 530).

13. Vehicle (500) comprising a belt outlet arrangement according to any one of claims 1 to 7 and/or a belt outlet system according to any one of claims 8 to 12.

14. Method (600) of operating a belt outlet system (400; 505), the belt outlet system (400; 505) comprising:
a belt outlet arrangement (200; 400; 532) having an outlet bezel (220; 420) configured to guide a motion of a belt (B) which extends movably through a bezel opening (222; 422) of the outlet bezel (220; 420), and a trim portion (210; 410) adapted to cover at least a region of a structure (S) of a vehicle (500) to which the belt (B) is connected, the trim portion (210; 410) comprising an elastic region (214; 414) in which a trim opening (212; 412) is arranged, wherein the outlet bezel (220; 420) is arranged adjacent the elastic region (214; 414) of the trim portion (210; 410) such that the trim opening (212; 412) is cladded at least partially by means of the outlet bezel (220; 420) to form an outlet for the belt (B) through the trim portion (210; 410),
at least one actuator device (430; 530) arranged to change a position of the outlet bezel (220; 420),
at least one sensor (520) configured to detect a position of at least a part of a body of a user of the belt (B), and
a control unit (510),
wherein the method (600) comprises:
receiving (610), by means of the control unit (510) and from the at least one sensor (520), a sensor signal indicative of the position of at least the part of the body of the user of the belt (B);
generating (620), by means of the control unit (510) and based on the received sensor signal, a control signal for operating the at least one actuator device (430; 530) to adjust a position of the outlet bezel (220; 420) in accordance with the position of at least the part of the body of the user of the belt (B), and
outputting (630), by means of the control unit (510), the control signal towards the at least one actuator device (430; 530).

## Patentansprüche

1. Gurtauslassanordnung (200; 402; 532), insbesondere zur Verwendung in einem Fahrzeug (500), umfassend:
eine Auslassblende (220; 420), die so konfiguriert ist, dass sie eine Bewegung eines Gurts (B) führt, der sich beweglich durch eine Blendenöffnung (222; 422) der Auslassblende (220; 420) ausdehnt, und
einen Verkleidungsabschnitt (210; 410), der geeignet ist, mindestens eine Region einer Struktur (S) eines Fahrzeugs (500) abzudecken, mit dem der Gurt (B) verbunden ist, wobei der Verkleidungsabschnitt (210; 410) eine elastische Region (214; 414) aufweist, in der eine Verkleidungsöffnung (212; 412) angeordnet ist,
wobei:
die Auslassblende (220; 420) angrenzend an die elastische Region (214; 414) des Verkleidungsabschnitts (210; 410) angeordnet ist, so dass die Verkleidungsöffnung (212; 412) zumindest teilweise mittels der Auslassblende (220; 420) verkleidet wird, um einen Auslass für den Gurt (B) durch den Verkleidungsabschnitt (210; 410) zu bilden,
die elastische Region (214; 414) eine Änderung der Position der Auslassblende (220; 420) relativ zu mindestens einem Teil des Verkleidungsabschnitts (210; 410) ermöglicht.

2. Gurtauslassanordnung nach Anspruch 1, wobei die Auslassblende (220; 420) starres Material enthält.

3. Gurtauslassanordnung nach Anspruch 1 oder Anspruch 2, wobei die elastische Region (214; 414) Silikon enthält.

4. Gurtauslassanordnung nach Anspruch 1, wobei die elastische Region (214; 414) eine Änderung der Position der Auslassblende (220; 420) parallel zu einer Oberfläche des Verkleidungsabschnitts (210; 410) ermöglicht.

5. Gurtauslassanordnung nach einem der vorhergehenden Ansprüche, wobei die elastische Region (214; 414) eine Änderung der Position der Auslassblende (220; 420) in mindestens einer zwischen einer vertikalen und einer Längsrichtung des Fahrzeugs (500) ermöglicht.

6. Gurtauslassanordnung nach einem der vorhergehenden Ansprüche, wobei die Struktur (S) des Fahrzeugs (500) eine Säule des Fahrzeugs (500) umfasst.

7. Gurtauslassanordnung nach einem der vorhergehenden Ansprüche, wobei eine Position der Auslassblende (220; 420) über zumindest einen vorbestimmten Bereich veränderbar ist und wobei eine Elastizität eines Materials der elastischen Region (214; 414) und/oder eine Größe der elastischen Region (214; 414) derart gewählt ist, dass sich die elastische Region (214; 414) zumindest im Wesentlichen faltenfrei verformt, wenn die Position der Auslassblende (220; 420) innerhalb des vorbestimmten Bereichs verändert wird.

8. Gurtauslasssystem (400; 505), umfassend:
eine Gurtauslassanordnung nach einem der vorhergehenden Ansprüche und
mindestens eine Aktuatorvorrichtung (430; 530), die angeordnet ist, um eine Position der Auslassblende (220; 420) zu ändern.

9. Gurtauslasssystem nach Anspruch 8 in Kombination mit Anspruch 7, wobei ein Verfahrbereich der zumindest einen Aktuatorvorrichtung (430; 530) dem vorbestimmten Bereich entspricht.

10. Gurtauslasssystem nach Anspruch 8 oder Anspruch 9, ferner umfassend mindestens einen Sensor (520), der so konfiguriert ist, dass er eine Position von mindestens einem Teil eines Körpers eines Benutzers des Gurtes (B) erfasst.

11. Gurtauslasssystem nach Anspruch 10, wobei der mindestens eine Sensor (520) so konfiguriert ist, dass er eine Position einer Schulter des Benutzers des Gurtes (B) visuell erfasst.

12. Gurtauslasssystem nach Anspruch 10 oder Anspruch 11, das ferner eine Steuereinheit (510) umfasst, die zu Folgendem konfiguriert ist:
Empfangen eines Sensorsignals von dem mindestens einen Sensor (520), das die Position von mindestens dem Körperteil des Benutzers des Gurts (B) angibt;
Erzeugen, basierend auf dem empfangenen Sensorsignal, eines Steuersignals zum Betreiben der mindestens einen Aktuatorvorrichtung (430; 530), um eine Position der Auslassblende (220; 420) in Übereinstimmung mit der Position von mindestens dem Körperteil des Benutzers des Gurts (B) einzustellen, und
Ausgeben des Steuersignals an die mindestens eine Aktuatorvorrichtung (430; 530).

13. Fahrzeug (500), das eine Gurtauslassanordnung nach einem der Ansprüche 1 bis 7 und/oder ein Gurtauslasssystem nach einem der Ansprüche 8 bis 12 umfasst.

14. Verfahren (600) zum Betreiben eines Gurtauslasssystems (400; 505), wobei das Gurtauslasssystem (400; 505) Folgendes umfasst:
eine Gurtauslassanordnung (200; 400; 532) mit einer Auslassblende (220; 420), die konfiguriert ist, um eine Bewegung eines Gurts (B) zu führen, der sich beweglich durch eine Blendenöffnung (222; 422) der Auslassblende (220; 420) ausdehnt, und einem Verkleidungsabschnitt (210; 410), der angepasst ist, um zumindest eine Region einer Struktur (S) eines Fahrzeugs (500) abzudecken, mit der der Gurt (B) verbunden ist, wobei der Verkleidungsabschnitt (210; 410) eine elastische Region (214; 414) umfasst, in der eine Verkleidungsöffnung (212; 412) angeordnet ist, wobei die Auslassblende (220; 420) angrenzend an die elastische Region (214; 414) des Verkleidungsabschnitts (210; 410) angeordnet ist, so dass die Verkleidungsöffnung (212; 412) zumindest teilweise mittels der Auslassblende (220; 420) verkleidet wird, um einen Auslass für den Gurt (B) durch den Verkleidungsabschnitt (210; 410) zu bilden,
mindestens eine Aktuatorvorrichtung (430; 530), die angeordnet ist, um eine Position der Auslassblende (220; 420) zu ändern,
mindestens einen Sensor (520), der so konfiguriert ist, dass er eine Position von mindestens einem Teil eines Körpers eines Benutzers des Gurtes (B) erfasst, und
eine Steuereinheit (510),
wobei das Verfahren (600) umfasst:
Empfangen (610) eines Sensorsignals mittels der Steuereinheit (510) und von dem mindestens einen Sensor (520), das die Position von mindestens dem Körperteil des Benutzers des Gurts (B) angibt;
Erzeugen (620), mittels der Steuereinheit (510) und basierend auf dem empfangenen Sensorsignal, eines Steuersignals zum Betreiben der mindestens einen Aktuatorvorrichtung (430; 530), um eine Position der Auslassblende (220; 420) in Übereinstimmung mit der Position von mindestens dem Körperteil des Benutzers des Gurts (B) einzustellen, und
Ausgeben (630) des Steuersignals mittels der Steuereinheit (510) an die mindestens eine Aktuatorvorrichtung (430; 530).

## Revendications

1. Dispositif de sortie de ceinture (200 ; 402 ; 532), en particulier pour l'utilisation dans un véhicule (500), comprenant :
une lunette de sortie (220 ; 420) configurée pour guider le mouvement d'une ceinture (B) qui s'étend de manière mobile à travers une ouverture de lunette (222 ; 422) de la lunette de sortie (220 ; 420), et
une partie de garniture (210 ; 410) adaptée pour couvrir au moins une zone d'une structure (S) d'un véhicule (500) à laquelle la ceinture (B) est reliée, la partie de garniture (210 ; 410) comprenant une zone élastique (214 ; 414) dans laquelle une ouverture de garniture (212 ; 412) est disposée,
dans lequel :
la lunette de sortie (220 ; 420) est disposée adjacente à la zone élastique (214 ; 414) de la partie de garniture (210 ; 410) de sorte que l'ouverture de garniture (212 ; 412) est recouverte au moins partiellement au moyen de la lunette de sortie (220 ; 420) pour former une sortie pour la ceinture (B) à travers la partie de garniture (210 ; 410),
la zone élastique (214 ; 414) permet de modifier une position de la lunette de sortie (220 ; 420) par rapport à au moins une partie de la partie de garniture (210 ; 410).

2. Dispositif de sortie de ceinture selon la revendication 1, dans lequel la lunette de sortie (220 ; 420) comprend un matériau rigide.

3. Dispositif de sortie de ceinture selon la revendication 1 ou la revendication 2, dans lequel la zone élastique (214 ; 414) comprend du silicone.

4. Dispositif de sortie de ceinture selon la revendication 1, dans lequel la zone élastique (214 ; 414) permet de modifier la position de la lunette de sortie (220 ; 420) parallèlement à une surface de la partie de garniture (210 ; 410).

5. Dispositif de sortie de ceinture selon l'une quelconque des revendications précédentes, dans lequel la zone élastique (214 ; 414) permet de modifier la position de la lunette de sortie (220 ; 420) dans au moins une parmi une direction verticale et une direction longitudinale du véhicule (500).

6. Dispositif de sortie de ceinture selon l'une quelconque des revendications précédentes, dans lequel la structure (S) du véhicule (500) comprend un montant du véhicule (500).

7. Dispositif de sortie de ceinture selon l'une quelconque des revendications précédentes, dans lequel une position de la lunette de sortie (220 ; 420) est modifiable sur au moins une plage prédéterminée, et dans lequel une élasticité d'un matériau de la zone élastique (214 ; 414) et/ou une taille de la zone élastique (214 ; 414) est choisie de telle sorte que la zone élastique (214 ; 414) se déforme au moins essentiellement sans plis lorsque la position de la lunette de sortie (220 ; 420) est modifiée à l'intérieur de la plage prédéterminée.

8. Système de sortie de ceinture (400 ; 505) comprenant :
un dispositif de sortie de ceinture selon l'une quelconque des revendications précédentes, et
au moins un dispositif d'actionnement (430 ; 530) conçu pour modifier la position de la lunette de sortie (220 ; 420).

9. Système de sortie de ceinture selon la revendication 8 en combinaison avec la revendication 7, dans lequel une plage de déplacement de l'au moins un dispositif d'actionnement (430 ; 530) correspond à la plage prédéterminée.

10. Système de sortie de ceinture selon la revendication 8 ou la revendication 9, comprenant en outre au moins un capteur (520) configuré pour détecter une position d'au moins une partie du corps d'un utilisateur de la ceinture (B).

11. Système de sortie de ceinture selon la revendication 10, dans lequel l'au moins un capteur (520) est configuré pour détecter visuellement la position d'une épaule de l'utilisateur de la ceinture (B).

12. Système de sortie de ceinture selon la revendication 10 ou la revendication 11, comprenant en outre une unité de commande (510) configurée pour :
recevoir, à partir de l'au moins un capteur (520), un signal de capteur indiquant la position d'au moins la partie du corps de l'utilisateur de la ceinture (B) ;
générer, sur la base du signal de capteur reçu, un signal de commande pour faire fonctionner l'au moins un dispositif d'actionnement (430 ; 530) afin d'ajuster une position de la lunette de sortie (220 ; 420) en fonction de la position d'au moins la partie du corps de l'utilisateur de la ceinture (B), et
émettre le signal de commande vers l'au moins un dispositif d'actionnement (430 ; 530).

13. Véhicule (500) comprenant un dispositif de sortie de ceinture selon l'une quelconque des revendications 1 à 7 et/ou un système de sortie de ceinture selon l'une quelconque des revendications 8 à 12.

14. Procédé (600) de fonctionnement d'un système de sortie de ceinture (400 ; 505), le système de sortie de ceinture (400 ; 505) comprenant :
un dispositif de sortie de ceinture (200 ; 400 ; 532) comportant une lunette de sortie (220 ; 420) configurée pour guider un mouvement d'une ceinture (B) qui s'étend de manière mobile à travers une ouverture de lunette (222 ; 422) de la lunette de sortie (220 ; 420), et une partie de garniture (210 ; 410) adaptée pour couvrir au moins une zone d'une structure (S) d'un véhicule (500) à laquelle la ceinture (B) est reliée, la partie de garniture (210 ; 410) comprenant une zone élastique (214 ; 414) dans laquelle une ouverture de garniture (212 ; 412) est disposée, dans lequel la lunette de sortie (220 ; 420) est disposée adjacente à la zone élastique (214 ; 414) de la partie de garniture (210 ; 410) de telle sorte que l'ouverture de garniture (212 ; 412) est recouverte au moins partiellement au moyen de la lunette de sortie (220 ; 420) pour former une sortie pour la ceinture (B) à travers la partie de garniture (210 ; 410),
au moins un dispositif d'actionnement (430 ; 530) conçu pour modifier la position de la lunette de sortie (220 ; 420),
au moins un capteur (520) configuré pour détecter la position d'au moins une partie du corps d'un utilisateur de la ceinture (B), et
une unité de commande (510),
dans lequel le procédé (600) comprend :
la réception (610), au moyen de l'unité de commande (510) et à partir de l'au moins un capteur (520), d'un signal de capteur indiquant la position d'au moins la partie du corps de l'utilisateur de la ceinture (B) ;
la génération (620), au moyen de l'unité de commande (510) et sur la base du signal de capteur reçu, d'un signal de commande pour faire fonctionner l'au moins un dispositif d'actionnement (430 ; 530) afin d'ajuster une position de la lunette de sortie (220 ; 420) conformément à la position d'au moins la partie du corps de l'utilisateur de la ceinture (B), et
l'émission (630), au moyen de l'unité de commande (510), du signal de commande vers l'au moins un dispositif d'actionnement (430 ; 530).
